# EUROPEAN PATENT APPLICATION

(11) **EP 3 354 929 A1**
(43) Date of publication of application: **01.08.2018**
(21) Application number: 16848503.5
(22) Date of filing: 08.09.2016
(51) Int. Cl.: F16F 9/36, F16J 15/18

(54) **SHOCK ABSORBER**

(30) Priority: 24.09.2015 JP 2015186379
(71) Applicant: KYB Corporation, Tokyo 105-6111 (JP)
(72) Inventor: TAKEUCHI, Hideaki, Tokyo 105-6111 (JP)
(74) Representative: Grünecker Patent- und Rechtsanwälte PartG mbB
(86) International application number: PCT/JP2016/076416
(87) International publication number: WO 2017/051715

(57) **Abstract**

a shock absorber 100 includes a piston rod 3 and a rod guide 10 provided to one end within the cylinder 1, the rod guide 10 slidably supporting the piston rod 3. The rod guide 10 has a retainer 20 facing the extension-side chamber 110, the retainer being attached to the inner peripheral surface of the cylinder 1; a bearing 30 slidably supporting the piston rod 3; a main seal 40 provided between the bearing 30 and the retainer 20; and a seal holder 50 provided to the outside in the radial direction of the main seal 40 in a state of being compressed in the axial direction by the bearing 30 and the retainer 20, the seal holder 50 pressing the main seal 40 to the outer peripheral surface of the piston rod.

## Description

### TECHNICAL FIELD

The present invention relates to a shock absorber.

### BACKGROUND ART

US3837445 discloses a shock absorber. The shock absorber includes a cylinder in which an operation chamber is formed; an annular rod guide that is fixed to an opening of a top part of the cylinder; an annular seat that is provided to the operation chamber-side of the rod guide; a rod that is inserted into the inside of the rod guide and the seat such that the rod can move in the axial direction; an annular oil seal that is retained on the inner periphery of the rod guide and that seals the outer periphery of the rod; and an annular seal holder that is interposed between the rod guide and the seat and that is provided to the outer periphery of the oil seal.

### SUMMARY OF INVENTION

In the shock absorber disclosed in US3837445, the pressure of the operation chamber is transmitted to the oil seal via a communication passage that penetrates through the seat in the axial direction, and thereby the oil seal is pressed to the rod and the sealing performance is secured.

However, the pressure of the operation chamber originates from the pressure within a gas chamber provided to the inside of the cylinder in order to compensate for the volume of the piston rod in accordance with the extension/contraction operations. Therefore, if the extension/contraction state of the shock absorber changes, the pressure of the gas chamber fluctuates, and thus the pressure of the operation chamber also fluctuates. Consequently, in the shock absorber disclosed in US3837445, the pressure that acts on the oil seal fluctuates according to the extension/contraction state, and thus the sealing performance becomes unstable.

An object of the present invention is to stabilize the sealing performance of the shock absorber.

According to one aspect of the present invention, a shock absorber includes a cylinder in which a working fluid is sealed; a piston slidably provided to the inside of the cylinder, the piston partitioning the inside of the cylinder into an extension-side chamber and a contraction-side chamber; a piston rod connected to the piston, the piston rod being inserted into the cylinder such that the piston rod can move into and out of the cylinder; and a rod guide provided to one end within the cylinder, the rod guide slidably supporting the piston rod. The rod guide has a retainer facing the extension-side chamber, the retainer being attached to the inner peripheral surface of the cylinder; a bearing slidably supporting the piston rod; a main seal provided between the bearing and the retainer; and a seal holder provided to the outside in the radial direction of the main seal in a state of being compressed in the axial direction by the bearing and the retainer, the seal holder pressing the main seal to the outer peripheral surface of the piston rod.

### BRIEF DESCRIPTION OF DRAWINGS

FIG. 1 is a cross-sectional view of a shock absorber according to an embodiment of the present invention;
FIG. 2 is an enlarged cross-sectional view of a rod guide according to the embodiment of the present invention; and
FIG. 3 is a cross-sectional view illustrating the state before assembly of the rod guide according to the embodiment of the present invention.

### DESCRIPTION OF EMBODIMENTS

An embodiment of the present invention will now be described below referring to the attached drawings.

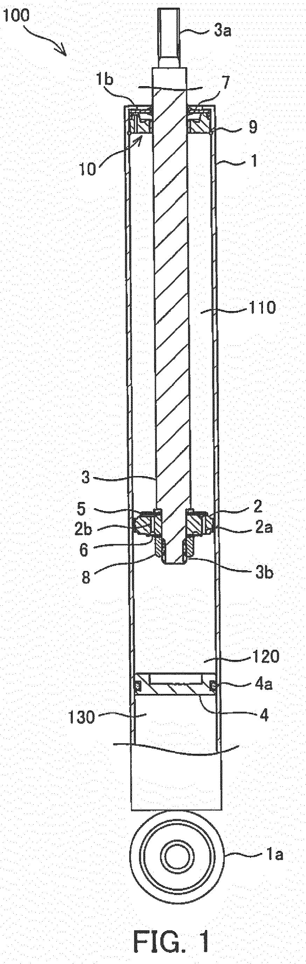

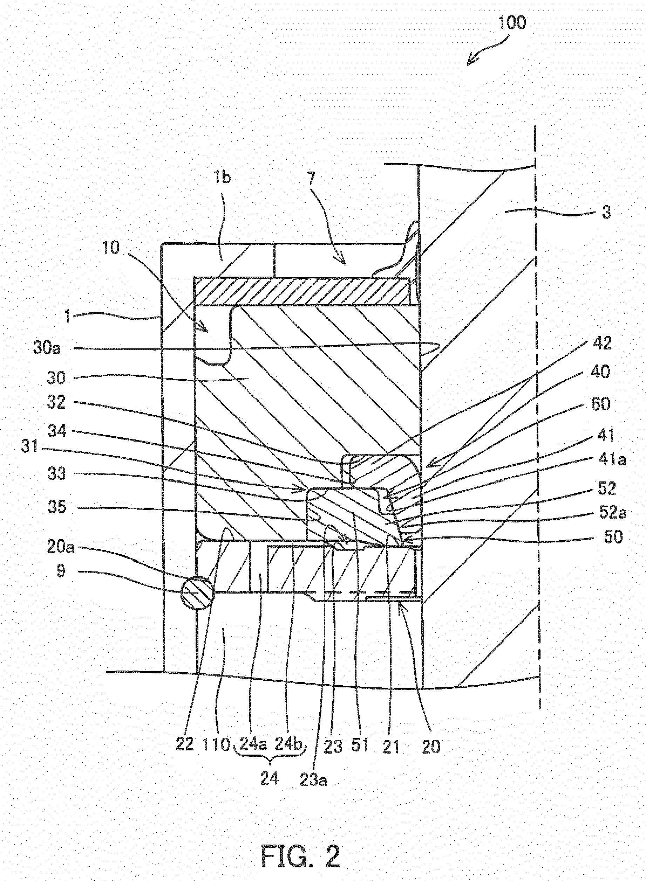

First, referring to FIGS. 1 and 2, the constitution of a shock absorber 100 according to an embodiment of the present invention will be described.

The shock absorber 100 is, for example, a device that is interposed between the vehicle body and the axle of an automobile (not illustrated), and generates a damping force to suppress vibrations of the vehicle body. As shown in FIG. 1, the shock absorber 100 includes a cylinder 1; an annular piston 2 that is slidably provided to the inside of the cylinder 1, and that partitions the inside of the cylinder 1 into an extension-side chamber 110 and a contraction-side chamber 120; a piston rod 3 that is connected to the piston 2, and that is inserted into the cylinder 1 such that the piston rod 3 can move into and out of the cylinder 1; and a rod guide 10 that is provided to one end (the top end in FIG. 1) within the cylinder 1, and that slidably supports the piston rod 3. The extension-side chamber 110 and the contraction-side chamber 120 are liquid chambers in which a hydraulic oil serving as a working fluid is sealed.

The shock absorber 100 is a mono-tube shock absorber provided with a free piston 4 that is slidably inserted into the cylinder 1 and defines a gas chamber 130. A seal member 4a that retains the air tightness of the gas chamber 130 is provided to the outer periphery of the free piston 4.

A male screw 3a for attaching the shock absorber 100 to the vehicle is formed on the end of the piston rod 3 on the side that extends from the cylinder 1, and a male screw 3b onto which a nut 8 is threaded is formed on the end of the piston rod 3 on the side that is inserted into the cylinder 1.

The piston 2 includes passages 2a, 2b that establish communication between the extension-side chamber 110 and the contraction-side chamber 120. A damping valve 5 that includes a plurality of annular leaf valves is provided to the extension-side chamber 110 side of the piston 2. Further, a damping valve 6 that includes a plurality of annular leaf valves is provided to the contraction-side chamber 120 side of the piston 2. The piston 2, the damping valve 5, and the damping valve 6 are fixed to the end of the piston rod 3 by the nut 8.

The damping valve 5 is opened by a pressure difference between the extension-side chamber 110 and the contraction-side chamber 120 during contraction of the shock absorber 100, thereby opening the passage 2a. Further, the damping valve 5 applies resistance to the flow of hydraulic oil moving from the contraction-side chamber 120 to the extension-side chamber 110 via the passage 2a. The damping valve 5 closes the passage 2a during extension of the shock absorber 100.

The damping valve 6 is opened during extension of the shock absorber 100, thereby opening the passage 2b. Further, the damping valve 6 applies resistance to the flow of hydraulic oil moving from the extension-side chamber 110 to the contraction-side chamber 120 via the passage 2b. The damping valve 6 closes the passage 2b during contraction of the shock absorber 100.

In other words, the damping valve 5 is a damping force generation element during contraction of the shock absorber 100, and the damping valve 6 is a damping force generation element during extension of the shock absorber 100.

The rod guide 10 abuts a retaining ring 9 (spring pin), which serves as a locking tool, provided to the inner peripheral surface of the cylinder 1, and thereby the axial direction position of the rod guide 10 is defined. The rod guide 10 will be further described below.

An oil seal 7 is provided to the rod guide 10 on the opposite side of the extension-side chamber 110. The oil seal 7 slidingly contacts the piston rod 3 to prevent hydraulic oil from leaking to the outside and to prevent foreign substances from entering into the cylinder 1.

The rod guide 10 and the oil seal 7 are fixed to the cylinder 1 by a caulked portion 1b, which serves as a compression part (to be described later), that is caulked by bending the end of the cylinder 1 toward the inside in the radial direction.

The end of the cylinder 1 on the gas chamber 130 side is closed by a cap member (not illustrated). As shown in FIG. 1, a connection member 1a for attaching the shock absorber 100 to the vehicle is provided to the end of the cylinder 1 on the gas chamber 130 side. It should be noted that the end of the cylinder 1 on the gas chamber 130 side may be closed by plasticity processing instead of providing a cap member.

When the shock absorber 100 contracts and the piston rod 3 moves into the cylinder 1, the free piston 4 moves to the gas chamber 130 side, and the gas in the gas chamber 130 is compressed by an amount equivalent to the volume of the piston rod 3 that has moved in. When the shock absorber 100 extends and the piston rod 3 moves out from the cylinder 1, the free piston 4 moves to the contraction-side chamber 120 side, and the gas in the gas chamber 130 expands by an amount equivalent to the volume of the piston rod 3 that has moved out. Thereby, the volume change within the cylinder 1 during the operation of the shock absorber 100 is compensated.

As shown in FIG. 2, the rod guide 10 includes a retainer 20 that faces the extension-side chamber 110 and is attached to the inner peripheral surface of the cylinder 1; a bearing 30 that slidably supports the piston rod 3; a main seal 40 that is provided between the bearing 30 and the retainer 20; and a seal holder 50 that is provided to the outside in the radial direction of the main seal 40 in a state of being compressed in the axial direction by the bearing 30 and the retainer 20, and that presses the main seal 40 to the outer peripheral surface of the piston rod 3.

The retainer 20 includes an annular locking groove 20a on an outer peripheral portion of the surface that opposes the extension-side chamber 110. The retainer 20 is locked to the inner peripheral surface of the cylinder 1 by locking the locking groove 20a to the retaining ring 9.

The retainer 20 includes, on an end surface on the opposite side of the extension-side chamber 110 (an end surface on the bearing 30 side), a contact portion that contacts the seal holder 50 and compresses the seal holder 50 between the retainer 20 and the bearing 30, and a non-contact portion that is separated from the seal holder 50.

The contact portion has an annular inside contact portion 21 and an annular outside contact portion 22 that are separated in the radial direction. The bearing 30 is provided contacting the outside contact portion 22. The inside contact portion 21 and the outside contact portion 22 are formed at different positions in the axal direction in a state of being locked by the retaining ring 9. Specifically, the inside contact portion 21 is formed at a position displaced toward the extension-side chamber 110 from the axial direction position of the outside contact portion 22. In other words, based on the position of the outside contact portion 22, the inside contact portion 21 is formed such that its position in the axial direction is lower than the position of the outside contact portion 22. Further, an annular groove 23, which serves as the non-contact portion and defines an annular space 23a, is formed between the inside contact portion 21 and the outside contact portion 22.

A communication passage 24 that establishes communication between the annular space 23a and the extension-side chamber 110 is formed in the retainer 20. The communication passage 24 is constituted by a penetration passage 24a that penetrates through the retainer 20 in the axial direction, and a radial direction passage 24b that is formed extending in the radial direction along the end surface of the retainer 20 opposing the bearing 30 and that establishes communication between the penetration passage 24a and the annular space 23a. By forming the communication passage 24 in the retainer 20, the pressure of the extension-side chamber 110 acts on the seal holder 50 via the communication passage 24, and the main seal 40 is pressed to the outer peripheral surface of the piston rod 3 via the seal holder 50.

The bearing 30 is provided between the oil seal 7 and the retainer 20 in the axial direction so as to contact both the oil seal 7 and the retainer 20. The bearing 30 slidably supports the piston rod 3 that is inserted into an insertion hole 30a. The bearing 30 has a recess 31 that defines, between the bearing 30 and the retainer 20, an accommodation space for accommodating the main seal 40 and the seal holder 50.

The recess 31 opens at the insertion hole 30a and opens at an end surface of the bearing 30 on the opposite side of the oil seal 7 (an end surface of the bearing 30 opposing the retainer 20). The recess 31 is formed by a first bottom surface 32 and a second bottom surface 33 that are perpendicular to the center axis, a first cylindrical surface 34 that connects the first bottom surface 32 and the second bottom surface 33, and a second cylindrical surface 35 that is formed to be larger than the inner diameter of the first cylindrical surface 34 and that connects the second bottom surface 33 and the end surface of the bearing 30. In other words, the recess 31 is formed in a stepped shape.

The main seal 40 is formed by an elastic member which is deformed by an external force. The main seal 40 includes a seal main body 41 that opposes the outer peripheral surface of the piston rod 3, and a flange portion 42 that extends radially outward from one end of the seal main body 41.

The seal main body 41 is formed in a cylindrical shape, and is disposed on the outer periphery of the piston rod 3. The flange portion 42 is formed to extend radially outward from the end of the seal main body 41 on the bearing 30 side (the top end in FIG. 2). In other words, the main seal 40 is formed in a bended shape with a substantially L-shaped cross-section.

The side surface of the seal main body 41 on the opposite side of the piston rod 3 is formed as a tapered surface 41a that is inclined relative to the center axis of the piston rod 3. The seal main body 41 of the main seal 40 does not contact the retainer 20 and is separated from the retainer 20 in the axial direction. Thereby, the air tightness between the outer peripheral surface of the piston rod 3 and the inner peripheral surface of the seal main body 41 is prevented from being lost due to contact between the seal main body 41 and the retainer 20.

The flange portion 42 is provided so as to be compressed between the seal holder 50 and the first bottom surface 32 of the recess 31 of the bearing 30. Thereby, a seal without any gaps is formed between the first bottom surface 32 and the seal holder 50. Further, the flange portion 42 is separated in the radial direction from the first cylindrical surface 34 of the recess 31. Thereby, the air tightness between the first bottom surface 32 of the recess 31 and the flange portion 42 is prevented from being lost due to contact between the first cylindrical surface 34 and the flange portion 42.

The seal holder 50 is formed by an elastic member that is deformed by an external force. The seal holder 50 includes a holder main body 51 that sandwiches the flange portion 42 of the main seal 40 between the holder main body 51 and the first bottom surface 32 of the recess 31 of the bearing 30, and a holder abutting portion 52 that contacts the tapered surface 41a of the seal main body 41 of the main seal 40 from the outside in the radial direction.

The holder main body 51 is sandwiched in the axial direction by the second bottom surface 33 of the recess 31 of the bearing 30 and the outside contact portion 22 of the retainer 20, and is provided in a state in which the flange portion 42 of the main seal 40 is sandwiched by the holder main body 51 and the first bottom surface 32. Thereby, a seal is formed between the second bottom surface 33 of the recess 31 and the holder main body 51 of the seal holder 50.

The holder abutting portion 52 has a contact surface 52a that is formed in a shape corresponding to the tapered surface 41a of the main seal 40 and that contacts the tapered surface 41a from the outside in the radial direction. The holder abutting portion 52 is provided so as to protrude radially inward from the inside in the radial direction of the holder main body 51. In other words, the seal holder 50 is also formed in a bended shape with a substantially L-shaped cross-section.

The holder abutting portion 52 contacts the inside contact portion 21 of the retainer 20, and is compressed in the axial direction by the first bottom surface 32 of the bearing 30 and the inside contact portion 21 of the retainer 20 via the main seal 40. Therefore, the holder abutting portion 52 expands radially inward according to the amount of compression in the axial direction, and presses the seal main body 41 of the main seal 40 toward the outer peripheral surface of the piston rod 3. Thereby, the outer peripheral surface of the piston rod 3 is sealed by the main seal 40.

In this way, in the shock absorber 100, the main seal 40 is pressed to the outer peripheral surface of the piston rod 3 by compressing the seal holder 50 in the axial direction by the retainer 20 and the bearing 30. By providing the shock absorber 100 with the seal holder 50, for example, the main seal 40 and the seal holder 50 can be made of different materials, such as a material with high durability for the main seal 40 and a material that exhibits high elasticity even at low temperatures for the seal holder 50, and thus the sealing performance of the rod guide 10 can be optimized.

An inner space 60, which is surrounded by the seal main body 41 and the flange portion 42 of the main seal 40 and the holder abutting portion 52 and the holder main body 51 of the seal holder 50, is formed between the main seal 40 and the seal holder 50. By adjusting the size (volume) of the inner space 60, the contact surface area between the tapered surface 41a of the main seal 40 and the contact surface 52a of the seal holder 50 is adjusted.

Next, a method for assembly of the rod guide 10 and a method for adjusting the air tightness between the piston rod 3 and the main seal 40 will be described.

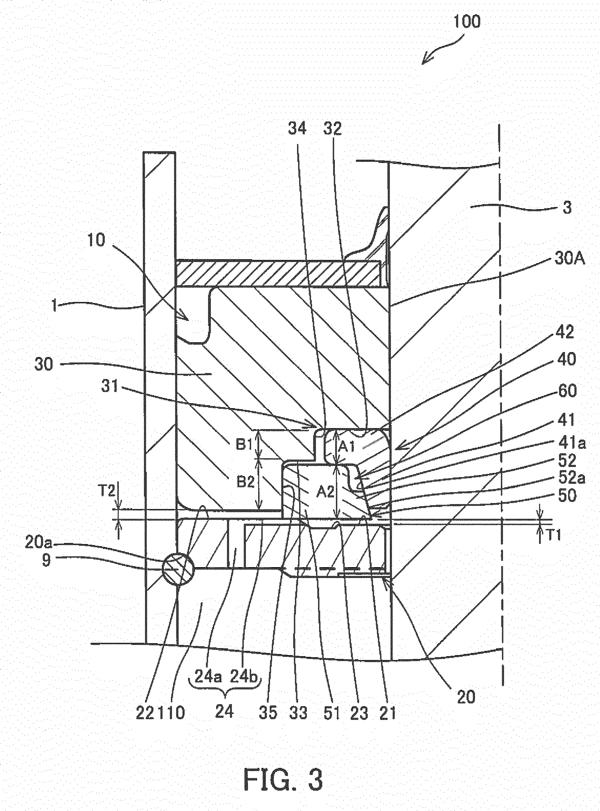

FIG. 3 illustrates the state before assembly of the rod guide 10, which is before the main seal 40 and the seal holder 50 are compressed by the bearing 30 and the retainer 20. In other words, this state is the state before the caulked portion 1b is formed on the end of the cylinder 1.

In the following, as shown in FIG. 3, the thickness of the flange portion 42 of the main seal 40 in the state before assembly of the rod guide 10 is indicated by "A1", and the thickness of the holder main body 51 of the seal holder 50 is indicated by "A2". The axial direction length of the first cylindrical surface 34 of the recess 31, i.e. the length between the first bottom surface 32 and the second bottom surface 33, is indicated by "B1", and the axial direction length of the second cylindrical surface 35, i.e. the axial direction length between the second bottom surface 33 and the end surface of the bearing 30, is indicated by "B2". The positional deviation amount in the axial direction between the inside contact portion 21 and the outside contact portion 22 is indicated by "T1". The gap between the bearing 30 and the outside contact portion 22 of the retainer 20 in the state before assembly of the rod guide 10 is indicated by "T2".

In the state before assembly of the rod guide 10, the main seal 40 is formed so that the thickness A1 of the flange portion 42 is greater than the axial direction length B1 of the first cylindrical surface 34 of the recess 31 of the bearing 30. Further, in the state before assembly of the rod guide 10, the seal holder 50 is formed so that the thickness A2 of the holder main body 51 is greater than the axial direction length B2 of the second cylindrical surface 35 of the recess 31 of the bearing 30. Therefore, in the state before assembly of the rod guide 10, the bearing 30 does not contact the outside contact portion 22 of the retainer 20, and the gap T2 is provided between the bearing 30 and the retainer 20. The gap T2 is set to be larger than the gap T1 between the outside contact portion 22 and the inside contact portion 21.

In this state, a caulking process is performed to bend the end of the cylinder 1 toward the inside in the radial direction so as to press the oil seal 7 in the axial direction, and thereby the caulked portion 1b is formed on the end of the cylinder 1. This causes the main seal 40 and the seal holder 50 to be compressed in the axial direction by the caulked portion 1b and the retaining ring 9 so that the gap T2 between the bearing 30 and the retainer 20 is eliminated via the oil seal 7, the bearing 30, and the retainer 20. In this way, in the present embodiment, the caulked portion 1b is a compression part that compresses the seal holder 50 in the axial direction via the bearing 30 and the retainer 20 between the caulked portion 1b and the retaining ring 9. In the above manner, the rod guide 10 is fixed to the end of the cylinder 1.

Therein, the flange portion 42 of the main seal 40 is compressed such that the thickness changes from A1 to B1, and the seal holder 50 is compressed such that the thickness of the holder main body 51 changes from A2 to B2. In other words, the gap T2 corresponding to the amount of compression by the bearing 30 and the retainer 20 corresponds to the sum of the difference between the thickness A1 of the flange portion 42 and the axial direction length B1 of the first cylindrical surface 34 and the difference between the thickness A2 of the holder main body 51 and the axial direction length B2 of the second cylindrical surface 35 before assembly of the rod guide 10.

When the main seal 40 and the seal holder 50 are compressed in the axial direction, a seal is formed between the first bottom surface 32 of the recess 31 and the flange portion 42 of the main seal 40 as well as between the second bottom surface 33 and the holder main body 51.

The holder abutting portion 52 of the seal holder 50 contacts the inside contact portion 21 of the retainer 20, and is compressed by the bearing 30 and the retainer 20 via the main seal 40. Therein, the volume of the inner space 60 decreases according to the amount of compression of the main seal 40 and the seal holder 50.

The amount of compression of the holder abutting portion 52 corresponds to the difference between the gap T2 and the gap T1. The holder abutting portion 52 expands radially inward according to the amount of compression corresponding to the difference between T1 and T2. Thereby, a pressing force corresponding to the amount of compression of the holder abutting portion 52 acts, toward the piston rod 3, on the tapered surface 41a of the seal main body 41 that contacts the contact surface of the holder abutting portion 52. Therefore, the seal main body 41 is pressed to the outer peripheral surface of the piston rod 3, and a seal is formed between the piston rod 3 and the main seal 40.

Accordingly, by adjusting the shapes of the main seal 40, the seal holder 50, the retainer 20, and the recess 31 and adjusting the compression amount and contact surface area of the main seal 40 and the seal holder 50, the sealing performance such as the air tightness and the friction between the piston rod 3 and the main seal 40 can be adjusted.

In more detail, the pressing force of the main seal 40 and the seal holder 50 is adjusted by adjusting the thickness A1 of the flange portion 42, the thickness A2 of the holder main body 51, the axial direction length B1 of the first cylindrical surface 34, the axial direction length B2 of the second cylindrical surface 35, and the axial direction positional deviation amount T1 between the inside contact portion 21 and the outside contact portion 22 in the state before assembly. By adjusting the above values, the pressing forces that form seals between the piston rod 3 and the seal main body 41 of the main seal 40, between the first bottom surface 32 and the flange portion 42, and between the second bottom surface 33 and the holder main body 51 of the seal holder 50 are adjusted.

Further, the range in which the pressing force generated by compressing the main seal 40 and the seal holder 50 is transmitted to the piston rod and the recess 31 can be adjusted by adjusting the contact surface area between the inside contact portion 21 and the seal main body 41 of the main seal 40 and the contact surface area between the outside contact portion 22 and the holder abutting portion 52 of the seal holder 50. Similarly, the manner in which the pressing force is transmitted to the piston rod 3 and the recess 31 can be adjusted by adjusting the contact surface area between the tapered surface 41a of the main seal 40 and the contact surface 52a of the seal holder 50 and the contact surface area between the flange portion 42 and the holder abutting portion 52, i.e. by adjusting the shape and size of the inner space 60.

As described above, in the shock absorber 100, the seal holder 50 is compressed by the retainer 20 and the bearing 30, and the main seal 40 is pressed to the outer peripheral surface of the piston rod 3. Therefore, in addition to the shapes of the retainer 20 and the recess 31 of the bearing 30, by adjusting the shapes of the main seal 40 and the seal holder 50, the pressing force that forms a seal and the range in which the pressing force is transmitted can be adjusted. In other words, by providing the seal holder 50 which is compressed in the axial direction so as to press the main seal 40, the parameters for adjusting the sealing performance such as the air tightness and the friction can be increased, and thus the sealing performance can be adjusted more precisely.

Next, alternative embodiments of the present embodiment will be described.

In the above-described embodiment, the compression part is a caulked portion 1b which is formed by a so-called tube end caulking in which the end of the cylinder 1 is bent radially inward. Instead of such a constitution, the compression part may be a caulked portion that is formed by so-called roll caulking in which the cylindrical surface of the cylinder 1 is deformed and recessed toward the inside in the radial direction. Further, the compression part is not limited to being formed by plasticity processing of the cylinder 1, and may be a fixing tool that fixes the rod guide 10, in a state in which the main seal 40 and the seal holder 50 are compressed by an axial force applied in advance, to the cylinder 1 while maintaining the state in which the axial force is applied. As such a fixing tool, for example, the retaining ring 9 of the above-described embodiment can be used. In this way, the compression part may take any arbitrary constitution as long as it generates an axial force between the compression part and the retaining ring 9 and fixes the rod guide 10 in a state in which the main seal 40 and the seal holder 50 are compressed in the axial direction.

Further, in the above-described embodiment, the inside contact portion 21 is provided at a lower position toward the extension-side chamber 110 than the outside contact portion 22. In contrast, in order to realize the desired sealing performance between the main seal 40 and the piston rod 3, the inside contact portion 21 may be provided at the same position in the axial direction as the outside contact portion 22, or may be provided at a higher position protruding toward the bearing 30 side than the outside contact portion 22.

According to the above-described embodiments, the following effects are achieved.

In the shock absorber 100, the seal holder 50 is compressed in the axial direction by the bearing 30 and the retainer 20 and expands in the radial direction according to the amount of compression. Thereby, the seal main body 41 of the main seal 40 is pressed to the outer peripheral surface of the piston rod 3. Therefore, even if the pressure of the gas chamber 130 changes due to the extension/contraction of the shock absorber 100 and the pressure of the extension-side chamber 110 that acts on the seal holder 50 via the communication passage 24 fluctuates, the pressing force on the main seal 40 generated by the compression of the seal holder 50 is secured. Thus, the outer peripheral surface of the piston rod 3 is reliably sealed by the main seal 40.

The seal main body 41 of the main seal 40 contacts the holder abutting portion 52 of the seal holder 50 at the tapered surface 41a. Therefore, the compression of the seal holder 50 in the axial direction can be easily converted to a pressing force on the seal main body 41 toward the inside in the radial direction. Further, by changing the angle of the tapered surface 41a, the pressing force of the seal main body 41 can be easily adjusted.

Since the inner space 60 is formed between the main seal 40 and the seal holder 50, the sealing performance between the main seal 40 and the seal holder 50 and between the piston rod 3 and the recess 31 of the bearing 30 can be arbitrarily adjusted by changing the shapes of the main seal 40 and the seal holder 50 to adjust the size of the inner space 60.

The retainer 20 includes the inside contact portion 21 and the outside contact portion 22 which serve as the contact portion that contacts the seal holder 50, and the annular groove 23 which serves as the non-contact portion that is separated from the seal holder 50. Therefore, by changing the sizes of the inside contact portion 21, the outside contact portion 22, and the annular groove 23, the contact surface area between the retainer 20 and the seal holder 50 can be adjusted. Thus, the range in which the force compressed by the retainer 20 is transmitted to the main seal 40 via the seal holder 50 can be arbitrarily adjusted, and the sealing performance between the main seal 40 and the piston rod 3 can be adjusted.

The retainer 20 includes the communication passage 24 that guides the pressure of the extension-side chamber to the annular space 23a formed by the annular groove 23. Thereby, the pressure of the extension-side chamber 110 acts on the seal holder 50, and the main seal 40 can be further compressed so as to improve the sealing performance.

The constitution, operation, and effects of the embodiments of the present invention will now be summarized below.

The shock absorber 100 includes the cylinder 1 in which hydraulic oil is sealed; the piston 2 that is slidably provided to the inside of the cylinder 1, and that partitions the inside of the cylinder 1 into the extension-side chamber 110 and the contraction-side chamber 120; the piston rod 3 that is connected to the piston 2, and inserted into the cylinder 1 such that the piston rod 3 can move into and out of the cylinder 1; and the rod guide 10 that is provided to one end within the cylinder 1, and slidably supports the piston rod 3. The rod guide 10 includes the retainer 20 that faces the extension-side chamber 110 and is attached to the inner peripheral surface of the cylinder 1; the bearing 30 that slidably supports the piston rod 3; the main seal 40 that is provided between the bearing 30 and the retainer 20; and the seal holder 50 that is provided to the outside in the radial direction of the main seal 40 in a state of being compressed in the axial direction by the bearing 30 and the retainer 20, and that presses the main seal 40 to the outer peripheral surface of the piston rod.

In the above constitution, regardless of the extension/contraction state of the shock absorber 100, the main seal 40 is pressed to the outer peripheral surface of the piston rod by the seal holder 50, which is provided so as to be compressed in the axial direction, and thereby the outer peripheral surface of the piston rod 3 is sealed. Therefore, the sealing performance of the shock absorber 100 can be stabilized.

In the shock absorber 100, the main seal 40 includes the tapered surface 41a that is inclined relative to the center axis of the piston rod 3, and the seal holder 50 contacts the tapered surface 41a from the outside in the radial direction.

According to the above constitution, the compression of the seal holder 50 in the axial direction can be easily converted to a pressing force on the seal main body 41 toward the inside in the radial direction.

In the shock absorber 100, the main seal 40 includes the seal main body 41 that opposes the outer peripheral surface of the piston rod 3, and the flange portion 42 that extends radially outward from one end of the seal main body 41. The seal holder 50 includes the holder main body 51 that sandwiches the flange portion 42 between the holder main body 51 and the bearing 30, and the holder abutting portion 52 that contacts the seal main body 41 of the main seal 40 from the outside in the radial direction. The inner space 60, which is surrounded by the seal main body 41, the flange portion 42, the holder main body 51, and the holder abutting portion 52, is formed between the main seal 40 and the seal holder 50.

According to the above constitution, by changing the shapes of the main seal 40 and the seal holder 50 to adjust the size of the inner space 60, the sealing performance between the main seal 40 and the seal holder 50 and between the piston rod 3 and the bearing 30 can be arbitrarily adjusted.

In the shock absorber 100, the bearing 30 has the recess 31 that forms, between the bearing 30 and the retainer 20, an accommodation space for accommodating the main seal 40 and the seal holder 50. The recess 31 includes the first bottom surface 32 and the second bottom surface 33 that are perpendicular to the piston rod 3 in the axial direction. The first bottom surface 32 compresses the flange portion 42 and the holder main body 51 in the axial direction between the first bottom surface 32 and the retainer 20, and the second bottom surface 33 compresses the holder main body 51 in the axial direction between the second bottom surface 33 and the retainer 20.

In the above constitution, by providing the main seal 40 and the seal holder 50 such that they are compressed in the axial direction, a seal is also formed between the main seal 40 and the first bottom surface 32 of the recess 31 and between the seal holder 50 and the second bottom surface 33 of the recess 31. Thus, the hydraulic oil can be prevented from leaking to the outside from between the recess 31 and the main seal 40 and the seal holder 50.

In the shock absorber 100, the retainer 20 includes the contact portion (the inside contact portion 21 and the outside contact portion 22) that contacts the seal holder 50 and compresses the seal holder 50 between the retainer 20 and the bearing 30, and the annular groove 23 which serves as the non-contact portion that is separated from the seal holder 50.

In the above constitution, by changing the sizes of the contact portion and the non-contact portion, the surface contact area between the retainer 20 and the seal holder 50 is adjusted. Therefore, the range in which the force compressed by the retainer 20 is transmitted to the main seal 40 via the seal holder 50 can be arbitrarily adjusted, and the sealing performance between the main seal 40 and the piston rod 3 can be adjusted.

In the shock absorber 100, the contact portion includes the annular inside contact portion 21 and the annular outside contact portion 22 that are separated in the radial direction. The annular groove 23 is provided between the inside contact portion 21 and the outside contact portion 22 and defines the annular space 23a between the annular groove 23 and the seal holder 50. The communication passage 24 that establishes communication between the extension-side chamber 110 and the annular space 23a is formed in the retainer 20.

According to the above constitution, the pressure of the extension-side chamber 110 acts on the seal holder 50 via the communication passage 24 so that the main seal 40 is further compressed, and thereby the sealing performance of the outer peripheral surface of the piston rod 3 can be further improved.

The shock absorber 100 further includes the retaining ring 9 which serves as a locking tool that locks the retainer 20 to the inner peripheral surface of the cylinder 1, and the compression part (the caulked portion 1b) that compresses the seal holder 50 in the axial direction via the bearing 30 and the retainer 20 between the compression part and the retaining ring 9. In the shock absorber 100, the compression part is the caulked portion 1b that is caulked radially inward from one end of the cylinder 1.

In the above constitutions, the rod guide 10 can be attached to the cylinder 1 in a state in which the seal holder 50 is compressed in the axial direction by the retaining ring 9 and the compression part.

The embodiments of the present invention described above are merely illustration of some application examples of the present invention and not of the nature to limit the technical scope of the present invention to the specific constructions of the above embodiments.

The present application claims a priority based on Japanese Patent Application No. 2015-186379 filed with the Japan Patent Office on September 24, 2015, all the contents of which are hereby incorporated by reference.

## Claims

1. A shock absorber comprising:
a cylinder in which a working fluid is sealed;
a piston slidably provided to the inside of the cylinder, the piston partitioning the inside of the cylinder into an extension-side chamber and a contraction-side chamber;
a piston rod connected to the piston, the piston rod being inserted into the cylinder such that the piston rod can move into and out of the cylinder; and
a rod guide provided to one end within the cylinder, the rod guide slidably supporting the piston rod, wherein
the rod guide has
a retainer facing the extension-side chamber, the retainer being attached to the inner peripheral surface of the cylinder;
a bearing slidably supporting the piston rod;
a main seal provided between the bearing and the retainer; and
a seal holder provided to the outside in the radial direction of the main seal in a state of being compressed in the axial direction by the bearing and the retainer, the seal holder pressing the main seal to the outer peripheral surface of the piston rod.

2. The shock absorber according to claim 1, wherein
the main seal has a tapered surface that is inclined relative to a center axis of the piston rod, and
the seal holder contacts the tapered surface from the outside in the radial direction.

3. The shock absorber according to claim 1, wherein
the main seal has
a seal main body opposing the outer peripheral surface of the piston rod; and
a flange portion extending radially outward from one end of the seal main body,
the seal holder has
a holder main body sandwiching the flange portion between the holder main body and the bearing; and
a holder abutting portion contacting the seal main body of the main seal from the outside in the radial direction, and
an inner space surrounded by the seal main body, the flange portion, the holder main body, and the holder abutting portion is formed between the main seal and the seal holder.

4. The shock absorber according to claim 3, wherein
the bearing has a recess that forms an accommodation space for accommodating the main seal and the seal holder between the bearing and the retainer,
the recess has a first bottom surface and a second bottom surface that are perpendicular to the piston rod in the axial direction,
the first bottom surface compresses the flange portion and the holder main body in the axial direction between the first bottom surface and the retainer, and
the second bottom surface compresses the holder main body in the axial direction between the second bottom surface and the retainer.

5. The shock absorber according to claim 1, wherein
the retainer has
a contact portion contacting the seal holder, the contact portion compressing the seal holder between the retainer and the bearing; and
a non-contact portion separated from the seal holder.

6. The shock absorber according to claim 5, wherein
the contact portion has an annular inside contact portion and an annular outside contact portion that are separated in the radial direction,
the non-contact portion is provided between the inside contact portion and the outside contact portion and defines an annular space between the non-contact portion and the seal holder, and
a communication passage that establishes communication between the extension-side chamber and the annular space is formed in the retainer.

7. The shock absorber according to claim 1, further comprising:
a locking tool locking the retainer to the inner peripheral surface of the cylinder; and
a compression part compressing the seal holder in the axial direction via the bearing and the retainer between the compression part and the locking tool.

8. The shock absorber according to claim 7, wherein
the compression part is a caulked portion that is caulked radially inward from one end of the cylinder.
